(19) Europäisches Patentamt / European Patent Office / Office européen des brevets

(11) **EP 3 366 647 A1**

(12) **EUROPEAN PATENT APPLICATION**

(43) Date of publication:
**29.08.2018 Bulletin 2018/35**

(51) Int Cl.:
***C01G 25/00*** *(2006.01)*   ***C01G 29/00*** *(2006.01)*
***C01F 17/00*** *(2006.01)*   ***C01G 3/00*** *(2006.01)*

(21) Application number: **17305200.2**

(22) Date of filing: **23.02.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **RHODIA OPERATIONS**
**75009 Paris (FR)**

(72) Inventors:
• **D'ALENÇON, Lauriane**
**92130 ISSY-LES-MOULINEAUX (FR)**

• **LE MERCIER, Thierry**
**93110 ROSNY-SOUS-BOIS (FR)**
• **BRAIDA, Marc-David**
**94360 BRY-SUR-MARNE (FR)**
• **PITIOT, Pascal**
**69008 LYON (FR)**

(74) Representative: **Delenne, Marc**
**Rhodia Services**
**Direction de la Propriété Industrielle**
**40, rue de la Haie-Coq**
**93306 Aubervilliers Cedex (FR)**

(54) **PLASMA SYNTHESIS OF PARTICLES COMPRISING A CHALCOGENIDE COMPRISING A RARE EARTH ELEMENT**

(57)     The invention concerns a process for preparing particles of a chalcogenide compound comprising at least one rare earth element, wherein :
- a mixture comprising precursor materials of the chalcogenide compound is introduced in a plasma;
- the mixture is transported with the help of a gas carrier in the plasma and is transformed into the particles of the chalcogenide compound;
- the particles of the chalcogenide compound are recovered.

**EP 3 366 647 A1**

**Description**

The invention concerns a process for preparing particles of a chalcogenide compound comprising at least one rare earth (RE) element involving a plasma.

Particles of chalcogenide compounds comprising at least one rare earth element such as, for example, rare earth sulfides, rare earth oxy sulfides or rare earth zirconium sulfides are known for their pigment, optical, luminescent, magnetic, electric or thermoelectric properties.

These particles of chalcogenide compound can be prepared via high-temperature solid-state methods.

In the process described by T. Schleid et al. in EUROPEAN JOURNAL OF SOLID STATE AND INORGANIC CHEMISTRY, 1993, p. 829-836, rare earth sufides $RE_2S_3$ (wherein RE denotes a rare earth element) were prepared by heating at temperature of 750 °C to 800 °C for a period of 7 days a mixture composed of rare earth element and elemental sulfur in a stoichiometric ratio of 2:3 in the presence of NaCl. Depending on the NaCl content, $RE_2S_3$ or $NaRES_2$ were preferentially obtained.

According to US6221473, $NaCeS_2$ was prepared by, in a first step, spray drying micronic cerium hydroxycarbonate pulp in the presence of sodium carbonate in an amount such that the Na/Ce ratio equaled 1. In a second step, the dried product was then heated to 800°C for 1 h in a stream of argon, $H_2S$ and $CS_2$. Finally, after deagglomeration, particles having an average size of $0.7\mu m$ were obtained.

Q.Su et al. in JOURNAL OF RARE EARTHS, 2009, Vol.27, issue 2, p. 308-311, proposed the synthesis of $RE_2S_3$ carried out by heating in a furnace rare earth oxide powders in the presence of $CS_2$ gas carried by Ar stream. According to the authors, $CS_2$ allowed shorter sulfurization time than $H_2S$, typically of the order of 3h at a temperature ranging from 800 °C to 1300 °C. Annealing at 1500 °C for 1 h. was required to obtain some particular crystal structures.

In the process described by S.P. Guo et al. in INORGANICA CHIMICA ACTA, 2016, vol. 448, p. 56-60, single crystals of $RE_2ZrS_5$ were obtained by heating in a quartz tube sealed under vacuum a powder consisting of a mixture of a rare earth oxide, zirconium oxide and elemental sulfur. Boron was added as reducing agent for capturing oxygen while KI was used as the flux. The molar ratios of RE: $ZrO_2$: S: B were 2: 1: 5: 6. This process required temperatures as high as 1200 K and reaction times of several days.

The particles of chalcogenide compound can also be prepared from solutions of precursors.

J. Zhang et al. in JOURNAL OF LUMINESCENCE, 2014, vol. 154, p. 145-147 proposed the synthesis of $NaYS_2$ by mixing a solution of $YCl_3.6H_2O$ in water and a solution of $Na_2S$ in water to obtain a colloidal suspension under stirring. After drying at 150°C for 3h and calcination at 1000°C for 2h in sulfur atmosphere a powder sample was obtained. The chemical reaction equation was :

$$4Na_2S + 2YCl_3 = 2NaYS_2 + 6\ NaCl$$

Introducing controlled amounts of $YbCl_3.6H_2O$ and $ErCl_3.6H_2O$ to $YCl_3.6H_2O$ solution allowed to prepare $Yb^{3+}$ and $Er^{3+}$ doped $NaYS_2$ powder. By doped $NaYS_2$, the author meant that some $Y^{3+}$ ions of the crystal lattice of NaYS were replaced by $Yb^{3+}$ or $Er^{3+}$ ions. Such doped structure were noted

$NaYS_2$ : x $Yb^{3+}$, y $Er^{3+}$ wherein x and y represented the molar ratio of respectively $Yb^{3+}$ and $Er^{3+}$ in the $NaYS_2$ lattice.

The prior art processes, such as the above described ones, require high temperatures and long, or even very long, reaction times.

In addition, the prior art processes, such as the above described ones, do not allow to produce crystalline nanoparticles having a very small median diameter and a very low polydispersity.

There is a need for a rapid and efficient process capable of manufacturing particles of chalcogenide compounds comprising at least one rare earth element.

There is also a need for a process capable of providing nanoparticles of chalcogenide compounds comprising at least one rare earth element which have a very small median diameter and, desirably too, a very low polydispersity.

All these needs and others are met by a process for preparing particles of a chalcogenide compound comprising at least one rare earth element, said chalcogenide compound being selected from the list consisting of sulfide, selenide, sulfide selenide, oxy sulfide, oxy selenide and oxy sulfide selenide, wherein :

- a mixture comprising precursor materials of the chalcogenide compound is introduced in a plasma;

- the mixture is transported with the help of a gas carrier in the plasma and is transformed into the particles of the chalcogenide compound;

- the particles of the chalcogenide compound are recovered.

Usually, the chalcogenide compound corresponds to formula (1):

$$(M_{1-a-b-c-d-e}M^{(1)}_{3a}M^{(2)}_{3b/2}M^{(3)}_{c}M^{(4)}_{3d/4}M^{(5)}_{3e/5})(S_{(3-f-g)/2}O_{f/2}Se_{g/2}) \qquad (1)$$

wherein M is a first rare earth element at the oxidation state +3 selected from the list consisting of Sc, Y, La, Ce, Pr, Nd, Pm, Sm, Eu, Gd, Tb, Dy, Ho, Er, Tm, Yb and Lu and,

wherein $M^{(1)}$ is an alkali metal at the oxidation state of +1 selected from the list consisting of Li, Na, K, Rb, Cs and Fr or is Cu at the oxidation state of +1 and, wherein $M^{(2)}$ is a rare earth element at the oxidation state +2 selected from the list consisting of Nd, Sm, Eu, Tm and Yb or an earth alkaline metal at the oxidation state +2 selected from the list consisting of Be, Mg, Ca, Sr, Ba and Ra or a metal at the oxidation state +2 selected from the list consisting of Cu, Zn, Cd, Hg, Sn and Pb and,

wherein $M^{(3)}$ is another rare earth element at the oxidation state of +3 selected from the list consisting of Sc, Y, La, Ce, Pr, Nd, Pm, Sm, Eu, Gd, Tb, Dy, Ho, Er, Tm, Yb and Lu or a metal at the oxidation state +3 selected from the list consisting of Ga, In and Bi and,

wherein $M^{(4)}$ is a rare earth element at the oxidation state of +4 selected from the list consisting of Ce, Pr, Nd, Tb and Dy or a metal at the oxidation state +4 selected from the list consisting of Sn, Ti, Zr and Hf and, wherein $M^{(5)}$ is an element at the oxidation state of +5 selected from the list consisting of P, As and Sb and,

wherein S, O and Se are at the oxidation state of -2 and,

wherein a, b, c, d, e, f and g are real numbers and,

$a + b + c + d + e \le 1$ and,

$f + g \le 3$ and,

$0 \le a < 1$; $0 \le b \le 1$; $0 \le c \le 1$; $0 \le d \le 1$; $0 \le e \le 1$; $0 \le f < 3$ and $0 \le g \le 3$.

In formula (1) f is strictly lower than 3; otherwise the compound would be an oxide which is falling out of the scope of the invention.

Similarly, a and e are strictly lower than 1; otherwise the compound would be free of rare earth element which is also out of the scope of the invention.

Generally the chalcogenide compound comprises a molar ratio of rare earth element having a positive oxidation state to the total content of elements having a positive oxidation state of at least 25 %. Often, the chalcogenide compound comprises a molar ratio of rare earth element having a positive oxidation state to the total content of elements having a positive oxidation state of at least 50 % . Sometimes, the chalcogenide compound comprises, as sole element(s) having a positive oxidation state, one or more rare earth element(s).

Usually the chalcogenide compound comprises sulfur element at oxidation state -2. Often, the chalcogenide compound comprises a molar ratio of sulfur element at the oxidation state of -2 to the total content of elements having a negative oxidation state of at least 25 % and sometimes the chalcogenide compound comprises sulfur as sole element having a negative oxidation state.

In rare embodiments, the chalcogenide compound comprises selenide element at oxidation state -2 and is essentially free or is even completely free of sulfur.

Some preferred chalcogenide compounds prepared by the process according to the invention correspond to formula (1) wherein c = 0 and

either $a = b = d = e = f = g = 0$ (then, the chalcogenide compounds correspond to the formula $M_2S_3$, for example to compounds $La_2S_3$, $Gd_2S_3$, $Sm_2S_3$, $Ce_2S_3$ and $Yb_2S_3$),

or $a = d = e = f = g = 0$ and $b = 1/4$, (then, the chalcogenide compounds correspond to the formula $M^{(2)}S$, for example to compounds SmS, YbS and EuS),

or $a = d = e = f = g = 0$ and $b = 1$ (then, the chalcogenide compounds correspond to the formula $M_2M^{(2)}S_4$, for example, to compounds $CaLa_2S_4$, $CaSm_2S_4$, $SmEu_2S_4$ and $EuGa_2S_4$),

or $a = b = d = e = g = 0$ and $f = 2$ (then, the chalcogenide compounds correspond to the formula $M_2SO_2$, for example to compound $La_2O_2S$),

or $b = d = e = f = g = 0$ and $a = 1/4$ (then, the chalcogenide compounds correspond to the formula $MM^{(1)}S_2$, for example to compounds $LiCeS_2$, $LiYS_2$, $LiErS_2$, $LiHoS_2$, $LiDyS_2$, $NaLaS_2$, $NaCeS_2$ and $NaYS_2$),

or $b = d = e = f = g = 0$, $a = 1/4$ and $f = 3/2$ (then, the chalcogenide compounds correspond to the formula $MM^{(1)}SO$, for example to compound CuLaOS),

or $a = e = f = g = 0$ , $b = 1/3$ and $d = 2/3$ (then, the chalcogenide compounds correspond to the formula $M^{(2)}M^{(4)}S_3$, for example to compound $EuZrS_3$),

or $a = b = e = f = g = 0$ and $d = 2/5$ (then, the chalcogenide compounds correspond to the formula $M_2M^{(4)}S_5$, for example, to compound $Y_2ZrS_5$).

Some other preferred chalcogenide compounds prepared by the process according to the invention correspond to formula (1) wherein c = ½ and
either a = b = d= e = f = g = 0 (then the chalcogenide compounds correspond to the formula $MM^{(3)}S_3$, for example to compounds $PrGdS_3$, $NdGdS_3$ and $LaYbS_3$),
or a = b = d = e = g = 0 and f = 2 (then chalcogenide compounds correspond to the formula $MM^{(3)}SO_2$, for example to compound $LaBiO_2S$).

Still other preferred chalcogenide compounds prepared by the process according to the invention correspond to formula (1) wherein c = 3/8 and a = d= e = f = g = 0 and b = ¼. Then, the chalcogenide compounds correspond to the formula $MM^{(2)}M^{(3)}S_4$, for example to compound $EuSmGdS_4$.

The particles of the chalcogenide compound according to the invented process are generally in the form of a powder which comprises primary particles and agglomerates of these primary particles.

Deagglomeration of the agglomerates of the primary particles can be achieved by any process well known by the person skilled in the art.

Just by way of example, deagglomeration can be achieved by grinding the powder using a ball mill in a wet process involving a solvent and a dispersing agent.

Preferably, deagglomeration is achieved by ultrasound treatment. For example, the powder can be dispersed in a liquid medium comprising at least one solvent or water or a mixture thereof and a dispersing agent and ultrasound vibrations can then be applied using a probe until complete deagglomeration of the particles.

The particles of the chalcogenide compound according to the invented process are generally submicronic particles.

Preferably, the median diameter D(50) of the particles according to the invented process is of at most 200 nm; more preferably, it is of at most 100 nm; still more preferably, it is of at most 50 nm. On the other hand, the median diameter D(50) of the particles according to the invented process is generally of at least 1 nm; it can be of at least 2 nm, at least 5 nm or at least 10 nm.

The particle size distribution can be determined by dynamic light scattering using the Zetasizer Nano ZS from Malvern Instruments equipment and the related software, following the recommendations of the provider.

Particles size distribution can be determined on a water suspension comprising 10 wt. %, with regard to water, of a sample of powder and comprising from 1 wt. % to 5 wt. %, with regard to the sample, of cysteine as dispersing agent. If necessary, for deagglomeration of the particles, ultrasound vibrations can be applied during 5 min. using a Vibra-Cell™ 75186 high intensity ultrasonic processor equipped with a 13 mm probe at a power output of 130 watts.

The median diameter D(50) is the size, on the cumulative curve in volume of the distribution, at which 50% of the particles of the sample are smaller and 50% are larger.

Besides, the relative span of the particles according to the invented process is advantageously of at most 3. Preferably, it is of at most 2; more preferably, it is of at most 1.5; still more preferably , it is of at most 1. In most preferred embodiments, it may be of at most 0.75 or at most 0.5. The lower the polydispersity of the particles according to the invented process is, the lower their relative span.

The relative span is defined as below:

$$relative\ span = (D(90) - D(10))/D(50)$$

wherein D(10) is the size, on the cumulative curve in volume of the distribution, at which 10% of the particles are smaller and D(90) is the size at which 90 % of the particles are smaller. D(10), D(50) and D(90) are determined by dynamic light scattering as previously discussed.

In preferred embodiments, the particles of the chalcogenide compound according to the invented process are crystalline. The crystalline nature of the compounds can be typically revealed by X-ray crystallography determination which provides a diffraction pattern. The crystalline particles according to the invented process generally comprise at least one crystallite to which is associated a coherently scattering range obtained by X-ray diffraction. The crystallite average size can be determined using X-ray powder diffraction and corresponds to the size of the coherent range calculated based on the breadth of the two most intense diffraction lines and using the Scherrer model. Assuming that the shape of the crystallite is spherical, the average diameter of the at least one crystallite comprised in the particles according to the invented process is generally ranging from 1 nm to 200 nm and preferably from 10 nm to 100 nm.

In a preferred embodiment, the particles according to the invented process are composed of one and only one crystallite. In this preferred embodiment, the average diameter of the particles according to the invented process is generally ranging from 1 nm to 200 nm and preferably from 10 nm to 100 nm.

By precursor materials of the chalcogenide compound are meant the element(s) and/or compound(s) which when transformed together in the plasma result in the formation of the chalcogenide compound.

Examples of materials suitable for providing the mixture with chalcogenide elements are elemental sulfur,

elemental selenium, $O_2$, $H_2S$, $H_2Se$, $H_2O$, $Na_2S$, $Li_2S$, $K_2S$, $Na_2Se$, $Li_2Se$, $K_2Se$, $Na_2O$, $CS_2$, $CSe_2$, $CO_2$, thioacetamid, thiourea, selenourea, diselenocarbamates, dithiocarbamates and mixtures thereof. Elemental sulfur, $H_2S$, $Na_2S$, $CS_2$, thiourea and mixtures thereof are advantageously used, and $Na_2S$ and elemental sulfur may be preferred.

Materials suitable for providing the mixture with rare earth elements are rare earth (RE) metals, RE oxides, RE carbonates, RE hydroxycarbonates, RE oxalates, RE carboxylates, RE nitrates, RE chlorides, RE bromides and mixtures thereof. RE carbonates, RE hydroxycarbonates, RE oxalates, RE carboxylates, RE chlorides and mixtures thereof are possibly used, with RE carboxylates and RE chlorides being often used.

In some embodiments, other precursor materials of the chalcogenides compounds are required. It is for example materials capable of providing the mixture with at least one of a transition metal other than a rare earth transition metal (i.e. other than Sc and Y), a post transition metal, an alkali metal and an earth alkaline metal.

In some other embodiments rare earth oxides, transition metal oxides, post transition metal oxides, alkali metal oxides and earth alkaline metal oxide can be used for providing the mixture with respectively rare earth elements, transition metal other than Sc and Y, post transition metals, alkali metals or earth alkaline metal on one hand and with oxygen element on the other hand.

The mixture comprising precursor materials of the chalcogenide compound can also comprise other reactants such as oxidizing or reducing species. Commonly used reducing species are C and B.

The mixture comprising precursor materials of the chalcogenide compound can be introduced in the plasma in the form of solid particles or in the form of a liquid such as a solution, a suspension, or a colloidal suspension and/or in a gaseous form.

When the mixture is in the form of solid particles, the solid particles have generally a median diameter not exceeding 10 $\mu$m, sometimes not exceeding 5 $\mu$m and eventually not exceeding 1 $\mu$m.

When the mixture is in the liquid form, the precursor materials are solubilized or in suspension in a solvent which is generally composed of at least one organic solvent, of water or a mixture thereof. Often, the solvent is composed essentially of water or is water.

Preferably, the mixture comprising precursor materials of the chalcogenide compound is in solution or in colloidal suspension in water.

The temperature of the plasma has to be high enough for the mixture of precursor materials to be transformed into the desired chalcogenide compound during the residence time in the plasma.

The temperature in the plasma is generally ranging from 300 K to 6000 K, preferably from 400 K to 5000 K.

The mixture comprising precursor materials of the chalcogenide compound is generally introduced and transported in the plasma using a gas carrier. The gas carrier can be inert such as Ar, oxidative such as $O_2$ or reductive such as $H_2$. The gas carrier can be a mixture of inert gas with an oxidative or a reductive gas.

Thermal plasma and non-thermal plasma (also referred to as "cold plasma") technologies are suitable for the generation of the plasma in the process.

In some embodiments, a thermal plasma technology is used in the process. In particular, plasma is advantageously generated either by an induction plasma torch or by a microwave plasma torch. A non-limitative example of device that can be used for plasma generation in an induction plasma torch is described in WO 2006/079213. When the plasma is generated using a microwave plasma torch, the plasma generator device as described in US 8,748,785 or in EP 1734798 is used advantageously. The plasma is often generated in a microwave plasma torch.

When thermal plasma technology is used, the temperature in the plasma is generally ranging from 600 K to 6000 K, preferably from 1000 K to 5000 K.

In other embodiments, a non-thermal plasma technology is used in the process. Non-thermal plasma is advantageously produced either by dielectric barrier discharge or by corona discharge. The plasma is often generated by dielectric barrier discharge. Just as matter of example, a suitable dielectric barrier discharge plasma apparatus is described in WO16095035.

When non-thermal plasma technology is used, the temperature in the plasma is generally ranging from 300 K to 600 K, preferably from 400 K to 500 K.

In an embodiment, the mixture comprising precursor materials of the chalcogenide compound is submitted to a laminar flow in the plasma. US 2013/0270261 discloses how to proceed in order to obtain such a flow. The laminar flow environment allows a high velocity for the mixture comprising precursor materials and shields the mixture from turbulent flow effects. Thus, residence time of the mixture in the plasma is short and the residence time distribution of the mixture in the plasma is narrow and, consequently, particles size and particle shape are uniform.

In another embodiment, the mixture comprising precursor materials of the chalcogenide compound is in solution, in suspension or in colloidal suspension in water and is sprayed into droplets. A system for producing droplet stream having droplets with uniform diameter as described in WO14052833 is suitable for this purpose. The droplet stream is introduced and transported in the plasma using a gas carrier.

The whole content of WO 2006/079213, US 2013/0270261, EP 1734798, US 2013/0270261and WO14052833 is herein incorporated by reference for all purposes.

Still another embodiment would be to combine the preceding embodiments i.e. combining droplet stream production with laminar flow of the droplets in the plasma. Indeed, the combination of the uniform diameter of the droplets of mixture comprising precursor materials introduced in the plasma with the narrow residence time distribution of the droplets in the plasma should be in favor of a good control of particle size distribution. Moreover, the control of the size of the droplets should allow the control of the size of the final particles. Finally, the control of residence time of the droplets should be in favor of the control of the crystalline structure of the particles.

After reaction in the plasma, the particles of chalcogenide compound are generally recovered after quenching below the exit nozzle of the plasma. Quenching can be conducted by water immersion.

Some non-limitative examples of precursor materials and gas carrier combinations are reported below :

- $Gd_2S_3$ can be prepared using a mixture comprising $GdCl_3$ and S with a molar ratio 1:3 and using Ar as gas carrier.
- $NaYS_2$ can be prepared using a mixture comprising NaCl, $YCl_3$ and S in a molar ratio 1 : 1 : 2 or using a mixture comprising $Na_2S$ and $Y_2S_3$ in a molar ratio 1:1 and using Ar as gas carrier.
- LaCuOS can be prepared using a mixture comprising CuO, $LaCl_3$ and S in a molar ratio 1 : 1 : 1 and using Ar as gas carrier.

In some special embodiment, the chalcogenide compound prepared by the process according to the invention is a doped compound. As previously discussed, by doped is meant that some ions of the crystal lattice of the chalcogenide compound are replaced by other ions.

For the avoidance of doubt, formula (1) embraces doped chalcogenide compounds. However, the commonly used notation for such doped compounds is explained hereafter.

For example doped $Gd_2S_3$ can be prepared using a mixture comprising $GdCl_3$, $EuCl_3$ and S with a molar ratio 1-x : x : 3 wherein x is much lower than 1 (e.g. $0 < x \leq 0.05$) and using Ar as gas carrier. The resulting product is noted $Gd_2S_3 : x\ Eu^{3+}$ x indicating the molar ratio of $Eu^{3+}$ replacing $Gd^{3+}$ in $Gd_2S_3$ lattice. A notation $Gd_2S_3 : Eu^{3+}$ indicates that the $Gd_2S_3$ lattice is doped with $Eu^{3+}$ in an undetermined molar ratio.

Accordingly, the chalcogenide compound obtained by the process according to the invention can correspond to the following formulae :

$$M_2S_3 : x\ M^{(3)3+};\ MM(1)S_2 : x\ M^{(3)3+};\ M_2O_2S : x\ M^{(3)3+};$$

and, more particularly to :

$$Gd_2S_3 : x\ Eu^{3+};\ Gd_2S_3 : x\ Yb^{3+};\ NaYS_2 : x\ Er^{3+};\ NaYS_2 : x\ Yb^{3+};\ La_2O_2S : x\ Eu^{3+};\ La_2O_2S : x\ Tb^{3+};$$
$$La_2O_2S : x\ Eu^{3+},\ y\ Tb^{3+}\ and\ (La, Bi)_2O_2S : x\ Eu^{3+},$$

wherein $0 < x \leq 0.05$ and $0 < y \leq 0.05$.

It is another object of the invention to provide crystalline nanoparticles having a very small median diameter, desirably too a very low polydispersity.

To this end, the present invention concerns particles of a chalcogenide compound comprising at least one rare earth element, wherein the chalcogenide compound is selected from the list consisting of sulfide, selenide, sulfide selenide, oxy sulfide, oxy selenide and oxy sulfide selenide and wherein the particles have a median diameter D(50) of at most 200 nm.

Preferably, the median diameter D(50) of the invented particles is of at most 200 nm; more preferably, it is of at most 100 nm; still more preferably, it is of at most 50 nm. On the other hand, the median diameter D(50) of the invented particles is generally of at least 1 nm; it can be of at least 2 nm, at least 5 nm or at least 10 nm.

Besides, the relative span of the invented particles is advantageously of at most 3. Preferably, it is of at most 2; more preferably, it is of at most 1.5; still more preferably , it is of at most 1. In most preferred embodiments, it may be of at most 0.75 or at most 0.5. The lower the polydispersity of the invented particles is, the lower their relative span.

Methods for determining the median diameter D(50) and the relative span of the particles are well known to the skilled person.

In preferred embodiments, the invented particles are crystalline. The crystalline nature of the compounds can be revealed by X-ray crystallography determination which provides a diffraction pattern.

The crystalline particles generally comprise at least one crystallite to which is associated a coherently scattering range obtained by X-ray diffraction. The crystallite average size can be determined using X-ray powder diffraction and corresponds to the size of the coherent range calculated based on the breadth of the two most intense diffraction lines and using the Scherrer model. Assuming that the shape of the crystallite is spherical, the average diameter of the at least one crystallite comprised in the invented particles ranges generally from 1 nm to 200 nm and preferably from 10 nm to 100 nm.

In a preferred embodiment, the invented particles are composed of one and only one crystallite. In this preferred embodiment, the average diameter of the invented particles generally ranges from 1 nm to 200 nm and preferably from 10 nm to 100 nm.

The chemical nature of the invented particles can be in accordance with any of the above described embodiments related to the particles prepared by the invented process, meeting notably all the expressed preferences at whatever level of preference.

Thus, just for the sake of example, some preferred particles are particles of a chalcogenide compound corresponding a formula chosen from $La_2S_3$, $Gd_2S_3$, $Sm_2S_3$, $Ce_2S_3$, $Yb_2S_3$, SmS, YbS, EuS, $CaLa_2S_4$, $CaSm_2S_4$, $SmEu_2S_4$, $EuGa_2S_4$, $La_2O_2S$, $LiCeS_2$, $LiYS_2$, $LiErS_2$, $LiHoS_2$, $LiDyS_2$, $NaLaS_2$, $NaCeS_2$, $NaYS_2$, CuLaOS, $EuZrS_3$, $Y_2ZrS_5$, $PrGdS_3$, $NdGdS_3$, $LaYbS_3$, $LaBiO_2S$ and $EuSmGdS_4$.

Still for the sake of example, some other preferred particles are particles of a chalcogenide compound corresponding to a formula chosen from:

$Gd_2S_3 : x\ Eu^{3+}$; $Gd_2S_3 : x\ Yb^{3+}$; $NaYS_2 : x\ Er^{3+}$; $NaYS_2 : x\ Yb^{3+}$; $La_2O_2S : x\ Eu^{3+}$; $La_2O_2S : x\ Tb^{3+}$; $La_2O_2S : x\ Eu^{3+}$, $y\ Tb^{3+}$ and $(La, Bi)_2O_2S : x\ Eu^{3+}$, wherein $0 < x \leq 0.05$ and $0 < y \leq 0.05$.

## Claims

1. Process for preparing particles of a chalcogenide compound comprising at least one rare earth element, said chalcogenide compound being selected from the list consisting of sulfide, selenide, sulfide selenide, oxy sulfide, oxy selenide and oxy sulfide selenide, wherein :

   - a mixture comprising precursor materials of the chalcogenide compound is introduced in a plasma;
   - the mixture is transported with the help of a gas carrier in the plasma and is transformed into the particles of the chalcogenide compound;
   - the particles of the chalcogenide compound are recovered.

2. Process according to claim 1, **characterized in that** the chalcogenide compound corresponds to formula (1):

$$(M_{1-a-b-c-d-e}M^{(1)}_{3a}M^{(2)}_{3b/2}M^{(3)}_{c}M^{(4)}_{3d/4}M^{(5)}_{3e/5})(S_{(3-f-g)/2}O_{f/2}Se_{g/2}) \qquad (1)$$

   wherein M is a first rare earth element at the oxidation state +3 selected from the list consisting of Sc, Y, La, Ce, Pr, Nd, Pm, Sm, Eu, Gd, Tb, Dy, Ho, Er, Tm, Yb and Lu and,
   wherein $M^{(1)}$ is an alkali metal at the oxidation state of +1 selected from the list consisting of Li, Na, K, Rb, Cs and Fr or is Cu at the oxidation state of +1 and,
   wherein $M^{(2)}$ is a rare earth element at the oxidation state +2 selected from the list consisting of Nd, Sm, Eu, Tm and Yb or an earth alkaline metal at the oxidation state +2 selected from the list consisting of Be, Mg, Ca, Sr, Ba and Ra or a metal at the oxidation state +2 selected from the list consisting of Cu, Zn, Cd, Hg, Sn and Pb and,
   wherein $M^{(3)}$ is another rare earth element at the oxidation state of +3 selected from the previous list or a metal at the oxidation state +3 selected from the list consisting of Ga, In and Bi and,
   wherein $M^{(4)}$ is a rare earth element at the oxidation state of +4 selected from the list consisting of Ce, Pr, Nd, Tb and Dy or a metal at the oxidation state +4 selected from the list consisting of Sn, Ti, Zr and Hf and,
   wherein $M^{(5)}$ is an element at the oxidation state of +5 selected from the list consisting of P, As and Sb and,
   wherein S, O and Se are at the oxidation state of -2 and,
   wherein
   a, b, c, d, e, f and g are real numbers and,
   $a + b + c + d + e \leq 1$ and,
   $f + g \leq 3$ and,
   $0 \leq a \leq 1$; $0 \leq b \leq 1$; $0 \leq c \leq 1$; $0 \leq d \leq 1$; $0 \leq e < 1$; $0 \leq f < 3$ and $0 \leq g \leq 3$.

3. Process according to claim 1 or 2, **characterized in that** the particles of the chalcogenide compound are crystalline.

4. Process according to any one of claims 1 to 3, **characterized in that** the particles of the chalcogenide compound have a median diameter D(50) measured by dynamic light scattering of at most 200 nm and of at least 1 nm.

5. Process according to any one of claims 1 to 4, **characterized in that** the chalcogenide compound corresponds to any one of the following formulae:

$M_2S_3$; $M^{(2)}S$; $MM^{(3)}S_3$; $M_2M^{(2)}S_4$; $MM^{(3)}M^{(2)}S_4$; $M_2O_2S$; $MM^{(3)}O_2S$; $MM^{(1)}OS$; $MM^{(1)}S_2$; $M^{(2)}M^{(4)}S_3$; $M_2M^{(4)}S_5$.

6.  Process according to any one of claims 1 to 5, **characterized in that** the plasma temperature ranges from 300 K to 6000 K.

7.  Process according to any one of claims 1 to 6, **characterized in that** the plasma is generated by a non-thermal plasma technology, wherein the plasma temperature ranges from 300 K to 600 K.

8.  Process according to any one of the claims 1 to 6, **characterized in that** the plasma is generated by a thermal plasma technology, wherein the plasma temperature ranges from 600 K to 6000 K.

9.  Process according to any one of claims 1 to 8, **characterized in that** the mixture comprising precursor materials of the chalcogenide compound is in the form of a liquid such as a solution, a suspension, or a colloidal suspension.

10. Process according to claim 9, **characterized in that** the mixture is sprayed into droplets and that the droplets stream is introduced and transported in a plasma using a gas carrier.

11. Process according to any one of the previous claims, **characterized in that** the mixture comprising precursor materials of the chalcogenide compound is submitted to a laminar flow in the plasma.

12. Particles of a chalcogenide compound comprising at least one rare earth element, wherein the chalcogenide compound is selected from the list consisting of sulfide, selenide, sulfide selenide, oxy sulfide, oxy selenide and oxy sulfide selenide and wherein the particles have a median diameter D(50) of at most 200 nm.

13. Particles according to claim 12, **characterized in that** the median diameter D(50) of the particles ranges from 1 nm to100 nm.

14. Particles according to claim 12 or 13, **characterized in that** relative span of the particles is of at most 2.

15. Particles according to claim 12, **characterized in that** the median diameter D(50) of the particles ranges from 5 nm to 50 nm and the relative span of the particles is of at most 1.

**Europäisches Patentamt**
**European Patent Office**
**Office européen des brevets**

## EUROPEAN SEARCH REPORT

Application Number

EP 17 30 5200

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/066351 A1 (COUNCIL SCIENT IND RES [IN]; INDIAN INST OF TECHNOLOGY CHEN [IN]) 14 June 2007 (2007-06-14) * page 7, column 17 - column 18; examples 1,2,4,5,7 * | 12-15 | INV. C01G25/00 C01G29/00 C01F17/00 C01G3/00 |
| X | JONGJIN JUNG ET AL: "Europium-doped gadolinium sulfide nanoparticles as a dual-mode imaging agent for T1-weighted MR and photoluminescence imaging", BIOMATERIALS, vol. 33, no. 24, 1 August 2012 (2012-08-01), pages 5865-5874, XP055063640, ISSN: 0142-9612, DOI: 10.1016/j.biomaterials.2012.04.059 * Section 3.1 The synthesis and characterization of the GdS:Eu3+ NPs figure 2A * | 12-15 | |
| X | WO 2006/116261 A2 (NANOPRODUCTS CORP [US]; YADAV TAPESH [US]) 2 November 2006 (2006-11-02) * page 4, line 9 - line 25 * * page 5, line 4 - line 5 * * page 6, line 14 - line 18 * * page 8, line 3 - line 12 * * page 8, line 19 - page 11, line 25 * | 1-11 | TECHNICAL FIELDS SEARCHED (IPC) C01G C01F |

The present search report has been drawn up for all claims

| Place of search | Date of completion of the search | Examiner |
|---|---|---|
| Munich | 11 May 2017 | King, Ruth |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 366 647 A1**

## ANNEX TO THE EUROPEAN SEARCH REPORT
## ON EUROPEAN PATENT APPLICATION NO.

EP 17 30 5200

11-05-2017

| Patent document cited in search report | Publication date | Patent family member(s) | Publication date |
|---|---|---|---|
| WO 2007066351 A1 | 14-06-2007 | US 2007131143 A1<br>WO 2007066351 A1 | 14-06-2007<br>14-06-2007 |
| WO 2006116261 A2 | 02-11-2006 | US 2006248982 A1<br>WO 2006116261 A2 | 09-11-2006<br>02-11-2006 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6221473 B
- WO 2006079213 A
- US 8748785 B
- EP 1734798 A
- WO 16095035 A
- US 20130270261 A
- WO 14052833 A

**Non-patent literature cited in the description**

- **T. SCHLEID et al.** *EUROPEAN JOURNAL OF SOLID STATE AND INORGANIC CHEMISTRY,* 1993, 829-836
- **Q.SU et al.** *JOURNAL OF RARE EARTHS,* 2009, vol. 27 (2), 308-311
- **S.P. GUO et al.** *INORGANICA CHIMICA ACTA,* 2016, vol. 448, 56-60
- **J. ZHANG et al.** *JOURNAL OF LUMINESCENCE,* 2014, vol. 154, 145-147